# EUROPÄISCHE PATENTSCHRIFT

(11) **EP 0 581 192 B1**
(45) Veröffentlichungstag und Bekanntmachung des Hinweises auf die Patenterteilung: **03.12.1997**
(21) Anmeldenummer: 93111730.3
(22) Anmeldetag: 22.07.1993
(51) Int. Cl.: E03C 1/10, E03C 1/04, F16K 11/044

(54) **Brauseumsteller für eine Sanitärarmatur**
Shower-diverter for sanitary fitting
Robinet-déviateur de douche pour une armature sanitaire

(30) Priorität: 25.07.1992 DE 4224684
(43) Veröffentlichungstag der Anmeldung: 02.02.1994
(73) Patentinhaber: Hans Grohe GmbH & Co. KG, 77761 Schiltach (DE)
(72) Erfinder: Ginter, Gerhard, D-78144 Tennenbronn (DE); Heinzelmann, Werner, D-72275 Alpirsbach (DE)
(74) Vertreter: Patentanwälte Ruff, Beier, Schöndorf und Mütschele

(56) Entgegenhaltungen:
- DE-A- 3 124 214
- DE-A- 3 413 616
- DE-A- 3 442 490
- DE-A- 3 505 966
- DE-A- 3 939 224

## Beschreibung

Die Erfindung geht aus von einem Brauseumsteller in einer sänitären Mischarmatur mit einem Brauseanschluß.

Automatische Brauseumsteller sind so konstruiert, daß sie nach Schließen des Mischventils automatisch in die Stellung zurückkehren, in der der Brauseabgang abgeschaltet ist.

Diese Ausbildung der automatischen Brauseumsteller kann bei der Verhinderung des Rücksaugens von Schmutzwasser aus einem in einer gefüllten Badewanne liegenden Brauseschlauch bei Druckabfall im Leitungsnetz ausgenutzt werden.

So ist es bereits bekannt (DE-OS 39 39 224), zwischen dem Mischventil und dem Brauseumsteller eine Rücklaufbremse, beispielsweise einen Rückflußverhinderer, anzuordnen, der bei Druckabfall im Leitungsnetz das Zurückspringen eines automatischen Brauseumstellers unterstützt. Bei der bekannten Lösung ist die Rückflußbremse zwischen dem Mischventilgehäuse und dem Armaturengrundkörper insbesondere an einer Trennstelle zwischen zwei mechanisch getrennten, miteinander verbindbaren Teilen der Armatur angeordnet.

Es ist bereits eine Badewannenfüll- und Brausebatterie bekannt (DE-A1-3505966), zu der ein Umsteller für die Wannen- und Brausebeschickung gehört. Dieser Umsteller ist angeflanscht. In dem zu der Wanne führenden Ausgang des Umstellers ist ein verformbares Gummielement angebracht, das ein Zurücksaugen des Wassers aus dem zu der Wanne führenden Ausgang verhindern soll.

Der Erfindung liegt die Aufgabe zugrunde, einen Brauseumsteller hinsichtlich seines Sicherheitsverhaltens durch eine Rückflußbremse zu verbessern.

Zur Lösung dieser Aufgabe schlägt die Erfindung einen Brauseumsteller mit den Merkmalen des Hauptanspruchs vor. Weiterbildungen sind Gegenstand der Unteransprüche.

Der Brauseumsteller ist zum Einsetzen in eine Sanitärarmatur bestimmt. Er kann direkt in ein Sanitärarmaturgehäuse eingesetzt werden. Es ist jedoch auch möglich, ihn in einen Anschluß eines derartigen Gehäuses einzusetzen. Je nach Einzelfall wird ein Wasserauslaß beispielsweise einem Brauseabgang zugeordnet und der andere Auslaß beispielsweise einem Wannenauslauf. Es ist aber selbstverständlich auch möglich, daß der Brauseumsteller zum Umstellen zwischen zwei Brausen angeschlossen werden kann.

Der von der Erfindung vorgeschlagene Brauseumsteller kann so ausgebildet sein, daß die Rücklaufbremse nur das Zurückfließen von Wasser aus einem der beiden Auslässe verhindert. Dies kann dann ausreichen, wenn der Auslauf aus einer mit dem Brauseumsteller versehenen sanitären Mischarmatur so angeordnet ist, daß er nicht unter Wasser stehen kann.

Es kann jedoch in Weiterbildung auch vorgesehen sein, daß die Rückflußbremse das Zurückfließen von Wasser auch aus beiden Auslässen verhindert.

Die Erfindung schlägt vor, daß in Weiterbildung die Rückflußbremse so angeordnet sein kann, daß sie zusammen mit dem Brauseumstellerventil eine Belüftungseinrichtung bildet.

Hierzu kann beispielsweise vorgesehen sein, daß im Brauseumsteller eine Belüftungseinrichtung vorgesehen ist, also beispielsweise ein Belüftungsventil. Dies kann sowohl zum Entlüften des Brauseschlauchs als auch ggf. zum Entlüften des normalen Auslaufs dienen.

Erfindungsgemäß kann jedoch auch vorgesehen sein, daß die Rückflußbremse derart angeordnet und ausgebildet ist, daß zur Entlüftung einer der beiden Ausläufe dient.

In Weiterbildung der Erfindung kann vorgesehen sein, daß die Rücklaufbremse stromab des Brauseumstellerventils angeordnet ist.

Die Rücklaufbremse kann ein Ventilelement aufweisen, das mit einem Ventilsitz zusammenwirkt. Das Ventilelement kann beispielsweise verschiebbar sein, so daß das Öffnen und Schließen des von der Rücklaufbremse dargestellten Ventils durch eine Verschiebebewegung des Ventilelements geschieht.

Es ist jedoch ebenfalls möglich, daß das Ventilelement verformbar angeordnet ist, so daß die Öffnungs- und Schließbewegung eine Verformung des Ventilelementes ist.

Das Ventilelement kann beispielsweise in dem Brauseauslauf gehaltert sein, gleichgültig, ob es sich dabei um ein verschiebbares oder verformbares Ventilelement handelt.

Es ist jedoch ebenfalls möglich, daß das Ventilelement an dem Brauseumsteller selbst gehaltert wird.

Erfindungsgemäß kann in Weiterbildung vorgesehen sein, daß die Rücklaufbremse ein Ventilelement aufweist, das in Schließstellung beaufschlagt ist. Die Beaufschlagung kann durch eine Feder oder auch durch eine Eigenelastizität des Ventilelementes geschehen.

Erfindungsgemäß kann vorgesehen sein, daß das Ventilelement die Form einer zylindrischen Schürze aufweist. Dabei kann es sich sowohl um ein teilweise festgespanntes Ventilelement handeln, das sich zum Öffnen verformt. Es kann sich aber auch um ein verschiebbares Ventilelement handeln.

Ebenfalls möglich ist es, daß das Ventilelement die Form einer Membran aufweist, beispielsweise mit einem mittleren Loch, das zusammen mit einer Stange eines Brauseumstellers ein Ventil bildet.

Ebenfalls möglich ist es, daß das Ventilelement die Form eines verschiebbaren Tellers aufweist.

Die von der Erfindung vorgeschlagene Anordnung einer Rückflußbremse als Baueinheit mit einem Brauseumsteller hat den Vorteil, daß die Rückflußbremse unabhängig von dem Umsteller arbeitet, also auch dann arbeitet, wenn der Brauseumsteller beispielsweise aufgrund von Gegendruck nicht arbeitet. Dies bedeutet, daß die Rücklaufbremse erfindungsgemäß auch mit einem manuellen Brauseumsteller verwendet werden kann.

Weitere Merkmale, Einzelheiten und Vorzüge der Erfindung ergeben sich aus der folgenden Beschreibung bevorzugter Ausführungsformen der Erfindung sowie anhand der Zeichnung.
Hierbei zeigen:
- Fig. 1: schematisch einen Schnitt durch eine sanitäre Mischarmatur mit einem Auslauf und einem Brauseumsteller;
- Fig. 2: einen der Fig. 1 entsprechenden Teilschnitt mit einer geänderten Rücklaufbremse;
- Fig. 3: einen der Fig. 2 entsprechenden Schnitt bei einer geänderten Ausführungsform;
- Fig. 4: einen Schnitt durch einen weiteren Brauseumsteller ;
- Fig. 5: einen Teilschnitt durch einen weiteren Brauseumsteller;
- Fig. 6: einen Teilschnitt durch eine mit dem Brauseumsteller der Fig. 5 verwendbare Rückflußbremse;
- Fig. 7: eine weitere der Fig. 4 entsprechende Darstellung einer weiteren Ausführungsform;
- Fig. 8: einen Teilschnitt durch eine Rückflußbremse, die in Verbindung mit dem Brauseumsteller der Fig. 7 verwendet werden kann;
- Fig. 9: einen Teilschnitt durch eine weitere Rückflußbremse.

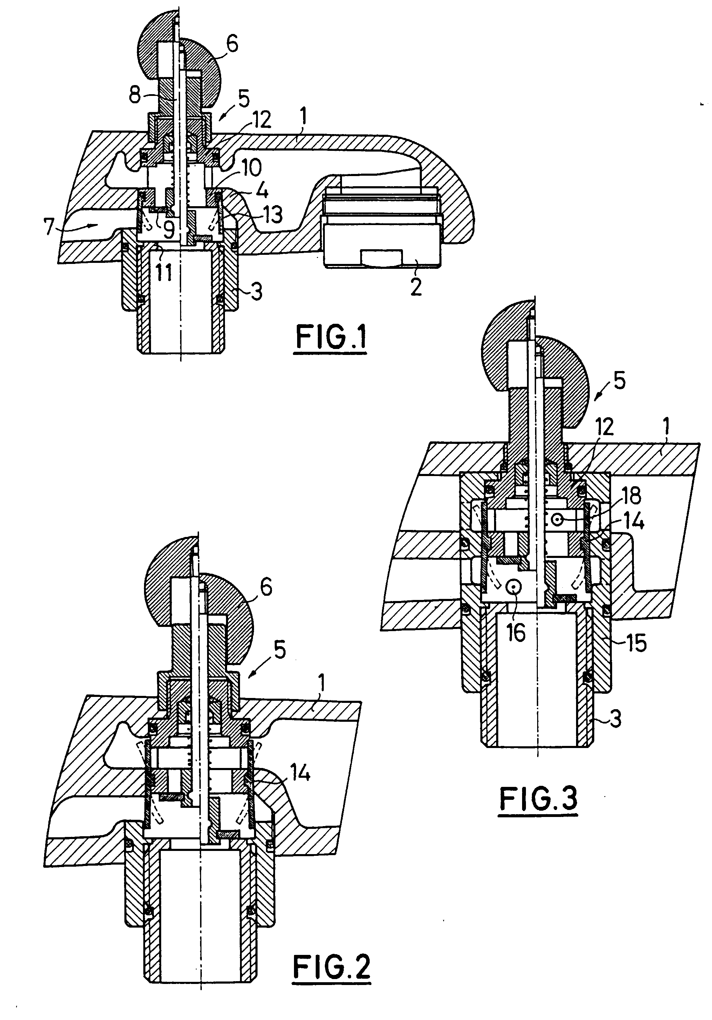

Fig. 1 zeigt einen horizontal verlaufenden Teil 1 einer sanitären Armatur, in dessen vorderen Bereich ein Wasserauslauf 2 angeordnet ist.

Neben dem Wasserauslauf 2, der beispielsweise für eine Badewanne bestimmt ist, ist ein Anschluß 3 für eine Brause angeordnet.

In der Sanitärarmatur ist eine horizontal verlaufende Trennwand 4 vorgesehen, in die ein Brauseumsteller 5 eingesetzt ist, der an der Oberseite der Sanitärarmatur aus dieser herausragt und dort einen Betätigungsgriff 6 aufweist. Die linke Hälfte des Brauseumstellers ist in einer Stellung gezeichnet, in der der Brauseanschluß 3 mit Wasser versorgt wird, während die rechte Hälfte die Stellung zeigt, in der der Wannenauslauf 2 mit Wasser versorgt wird.

Vom Mischventil gelangt das gemischte Wasser in Richtung des Pfeils 7 zu dem Brauseumsteller. Je nach Stellung des Brauseumstellers gelangt das Wasser dann durch die Trennwand 4 entweder zum Wannenauslauf 2 oder zum Brauseanschluß 3. Der Brauseumsteller 5 enthält eine verschiebbare Ventilstange 8, an deren unterem Ende eine Ventilscheibe 9 befestigt ist. Diese Ventilscheibe 9 wirkt mit einem dem Wannenauslauf zugeordneten Ventilsitz 10 oder mit einem dem Brauseanschluß zugeordneten Ventilsitz 11 zusammen.

In dem Gehäuse 12 des Brauseumstellers 5 ist im Bereich des Ventilsitzes 10 eine umlaufende Nut gebildet, in der ein Ventilelement 13 mit einem Ansatz gehaltert ist. Das Ventilelement weist die Form einer kreiszylindrischen Schürze auf und besteht aus gummielastischem Material. Die Schürze ist so angeordnet, daß der Raum zwischen dem Rand der Öffnung in der Trennwand 4 und dem oberen Ende des Brauseanschlusses 3 von der Schürze in deren unverformtem Zustand abgedichtet wird.

Wird der Brauseanschluß 3 durch Ziehen des Brauseumstellers 5 nach oben eingeschaltet und das Mischventil geöffnet, so weicht das schürzenartige Ventilelement 13 radial nach innen aus, wie dies in gestrichelten Linien dargestellt ist, so daß das Wasser ungehindert durch den Brauseanschluß 3 fließen kann. Bei gedrücktem Brauseumsteller fließt das Wasser in gleicher Weise zu dem Auslaß 2, wobei auch in diesem Fall das Ventilelement 3 sich verformt. Tritt ein Druckabfall einlaßseitig auf, so verformt sich das Ventilelement 13 zurück und schließt den Wassereinlaß ab. Ein Zurücksaugen von Schmutzwasser wird daher sowohl aus dem Brauseanschluß 3 als auch aus dem Wannenauslaß 2 verhindert. Die Brause wird im Unterdruckfall über den Wannenauslauf belüftet.

Bei der Ausführungsform nach Fig. 2 ist der Brauseumsteller 5 im wesentlichen gleich ausgebildet, wobei in diesem Fall jedoch das Ventilelement 14 in seinem mittleren Bereich festgehalten ist und sich schürzenartig nach oben und nach unten erstreckt. Für den zu dem Wasserauslaß 2 führenden Teil der Armatur 1 wird in diesem Fall eine doppelte Rücklaufbremse durch das Ventilelement 14 gebildet, wobei der verformte Zustand des Ventilelementes ebenfalls in gestrichelten Linien dargestellt ist.

Bei der Ausführungsform der Fig. 3 ist das Gehäuse 12 des Brauseumstellers in einer Buchse 15 angeordnet, die einschließlich des Brauseanschlusses 3 in die Sanitärarmatur 1 eingesetzt wird. Die Ventilsitze für das Ventilelement 14 und für das Ventil des Brauseumstellers 5 sind in diesem Fall in der Buchse 15 ausgebildet.

Der Raum innerhalb des Ventilelementes 14 weist schematisch zwei Belüftungseinrichtungen 16 auf, die zum Belüften sowohl des normalen Wannenauslaufes 2 als auch des Brauseanschlusses 3 dienen. Diese Belüftungsöffnungen können sowohl senkrecht zur Zeichnungsebene aus der jeweiligen Kammer führen oder auch z.B. entlang der Kolbenstange 8 oder durch diese hindurch nach außen führen.

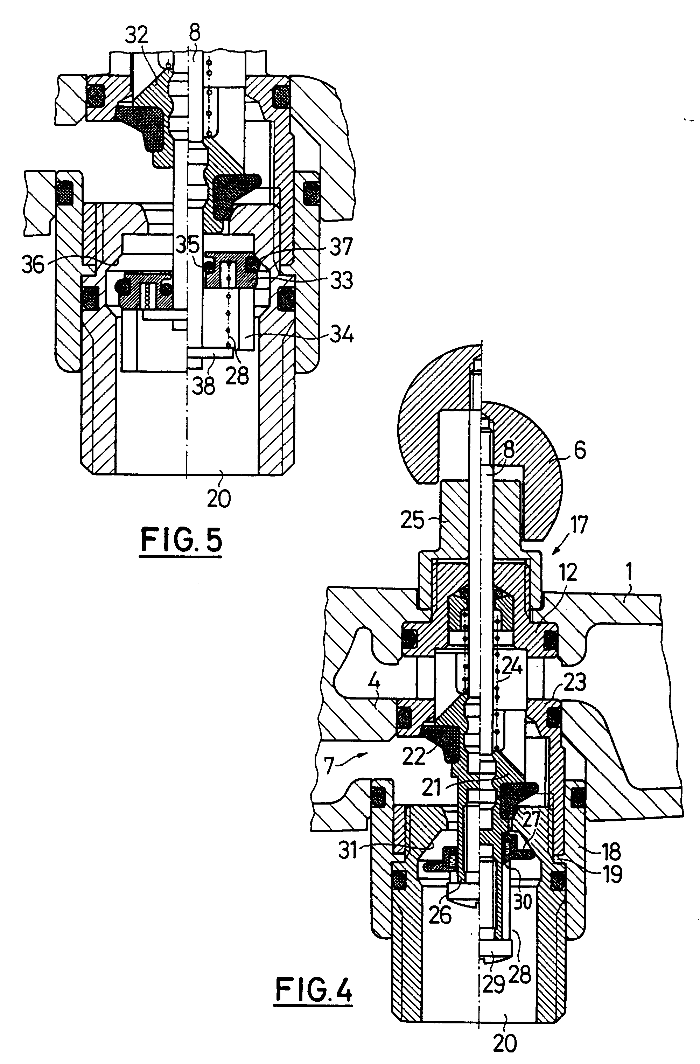

Fig. 4 zeigt in vergrößertem Maßstab eine weitere Ausführungsform eines Brauseumstellers mit einer Rückflußbremse. Die Sanitärarmatur 1 ist in gleicher Weise aufgebaut wie die Sanitärarmatur nach der Fig. 1. Die Trennwand 4, die Oberseite und die Unterseite enthalten jeweils eine Öffnung, die konzentrisch zueinander angeordnet sind. Von unten her ist das Gehäuse 12 des Brauseumstellers 17 eingesetzt, bis es mit einer oberen Schulter an der Sanitärarmatur 1 anliegt. Auf das untere Ende des Gehäuses 12 ist eine Buchse 18 aufgeschoben, die mit einer nach innen gerichteten Rippe 19 an der unteren Stirnseite des Gehäuses 12 anliegt. Von unten her ist in die Buchse 18 ein Anschlußstutzen 20 für einen Brauseanschluß eingesetzt und mit einem Außengewinde in das untere Ende des Gehäuses 12 des Brauseumstellers 17 eingeschraubt.

Zur Umstellung zwischen Brauseabgang und Wannenauslaß ist an der Ventilstange 8 ein Ventilverschlußkörper 21 befestigt, der eine umlaufende Dichtung 22 aufweist. Im mittleren Teil des Gehäuses 12 ist eine die Öffnung in der Trennwand 4 ausfüllende Querwand 23 mit einer zentralen Öffnung gebildet. Der Randbereich dieser Öffnung an der Unterseite der Querwand 23 bildet einen mit der Dichtung 22 zusammenwirkenden Ventilsitz.

Oberhalb des Ventilverschlußkörpers 21 erstreckt sich um die Ventilstange 8 herum eine Schraubendruckfeder 24, die den Brauseumsteller 17 in eine Stellung beaufschlagt, in der der Brauseabgang geschlossen ist.

Befestigt wird das Gehäuse 12 des Brauseumstellers 17 durch eine von der Oberseite her aufgeschraubte Überwurfmutter 25.

Der Ventilverschlußkörper 21 weist einen zylindrischen, sich bis in den Brauseabgang erstreckenden Ansatz 26 auf, in dessen Stirnseite eine Gewindebohrung eingebracht ist. Auf den zylindrischen Ansatz 26 ist ein Ventilelement 27 mit Tellerform aufgeschoben, das unter Zwischenlage einer Schraubenfeder 28 durch eine in die Gewindebohrung eingeschraubte Schraube 29 gehalten wird. Die Abdichtung des Ventilelements 27 gegenüber dem Ansatz 26 des Ventilverschlußkörpers 21 erfolgt durch eine am Innenumfang gebildete elastische Dichtlippe 30.

Im oberen Bereich des Anschlußstutzens 20 ist eine konische Verengung 31 gebildet, die einen Ventilsitz für das Ventilelement 27 bildet. Das Ventilelement 27 liegt an dieser Verengungsfläche 31 mit seinem Außenrand an, sofern das Mischventil der Sanitärarmatur geschlossen ist und kein Wasser in den dargestellten Teil der Sanitärarmatur 1 einströmt. Sobald Wasser in Richtung des Pfeils 7 einströmt und der Brauseumsteller in Richtung der Brause geschaltet ist, drückt der Wasserdruck das Ventilelement 27 von dem Ventilsitz 31 weg, so daß das Wasser dann durchfließen kann. Sobald der Druck nachläßt oder ein Unterdruck entsteht, wird das Ventilelement 27 wieder auf seinen Ventilsitz 31 gedrückt. Diese Bewegung des Ventilelements 27 ist unabhängig von der Stellung des Brauseumstellers möglich. Selbst wenn der Brauseumsteller nicht zurückgeschaltet wird, arbeitet die Rückflußbremse.

Die Rückflußbremse ist bei der Ausführungsform der Fig. 4 stromab des Brauseumstellerventils angeordnet. Bei dieser Ausführungsform wird der Raum stromauf des Umstellers über den Wannenauslauf belüftet.

Eine weitere Ausführungsform ist in Fig. 5 dargestellt, wobei hier nur der untere Teil gezeichnet ist. Der Ventilverschlußkörper 32 des Brauseumstellers, der im übrigen identisch ist wie der Brauseumsteller 17 der Fig. 4, enthält keinen zylindrischen Ansatz 26. Statt dessen ist die Ventilstange über das untere Ende des Ventilverschlußkörpers 32 hinaus verlängert. Der bis in den Anschlußstutzen 20 reichende Teil der Ventilstange 8 dient als Führung für das dort vorgesehene Ventilelement 33. Das Ventilelement 33 weist die Form einer flachen Scheibe mit Führungsansätzen 34 auf, die mit einem mittleren Loch auf der Ventilstange 8 geführt ist. Zur Abdichtung gegenüber der Stange 8 dient ein O-Ring 35. Der Ventilsitz, mit dem das Ventilelement 33 zusammenwirkt, wird wiederum von einer Konusfläche 36 in dem Stutzen 20 gebildet. An diesem Ventilsitz 36 liegt das Ventilelement 33 mit einem weiteren O-Ring 37 an.

Am Ende der Ventilstange 8 ist eine radiale Scheibe 38 befestigt, zwischen der und dem Ventilelement sich die Schraubendruckfeder 28 erstreckt, die das Ventilelement 33 in Richtung auf den Ventilsitz 36 beaufschlagt. Auch bei der Ausführungsform der Fig. 5 ist die Wirkung der Rückflußbremse unabhängig von der Stellung des Brauseumstellers 17.

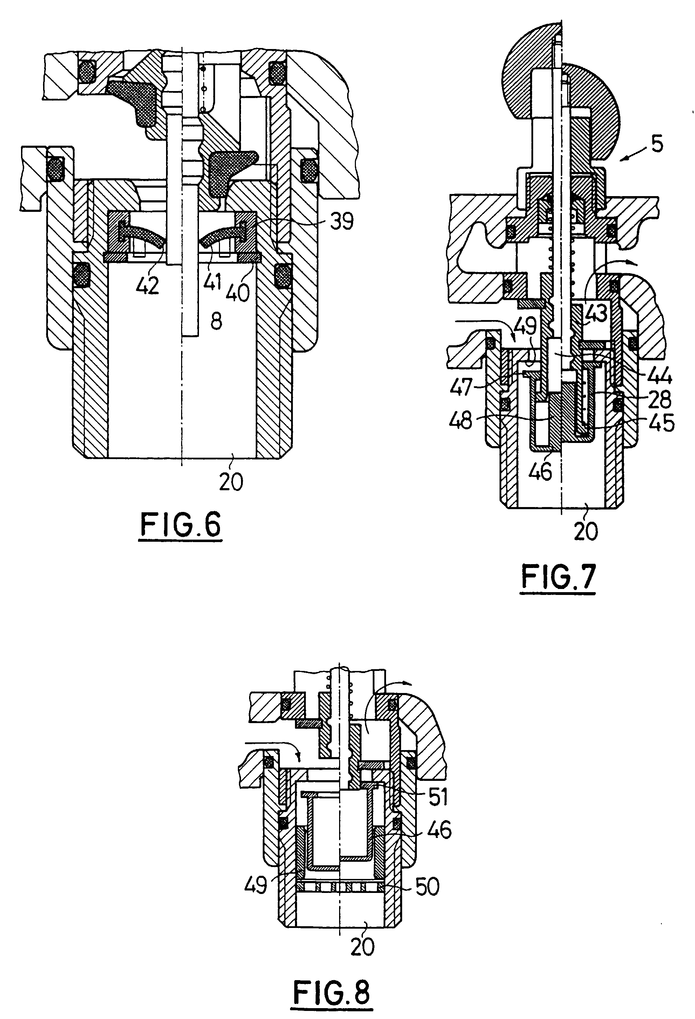

Bei der Ausführungsform nach Fig. 6 ist der Brauseumsteller 17 wieder der gleiche wie bei der Ausführungsform nach Fig. 5 mit dem einzigen Unterschied, daß die Scheibe 38 fehlt. In dem Anschlußstutzen 20 für den Brauseabgang ist im oberen Bereich ein Ring 39 gehaltert, beispielsweise durch einen Sprengring 40. Der Ring 39 weist eine radial nach innen gerichtete Nut auf, in der das Ventilelement 41 in Form einer Membran mit seinem Randbereich festgelegt ist. Die Membran weist ein zentrales Loch 42 auf, durch das sich die Stange 8 erstreckt. Die Stange 8 bildet damit den Ventilsitz, mit dem das membranförmige Ventilelement 41 zusammenwirkt. Die Beaufschlagung in geschlossener Stellung erfolgt in diesem Fall ähnlich wie bei der Ausführungsform nach den Figuren 1 bis 3 durch die Eigenelastizität des Materials des Ventilelements.

Bei der Ausführungsform nach Fig. 7 ist der Brauseumsteller 5 in ähnlicher Weise aufgebaut wie bei der Ausführungsform nach den Figuren 1 bis 3. Sein Ventilverschlußkörper 43 ist jedoch bis in den Anschlußstutzen 20 für den Brauseanschluß verlängert und weist in seiner Stirnseite ein Loch 44 auf. Am stirnseitigen Ende weist der Ventilverschlußkörper 43 einen nach außen gerichteten umlaufenden Rand 45 auf. Über das Ende ist ein Ventilelement 46 mit Topfform aufgesetzt, das im Bereich seines stirnseitigen offenen Endes einen nach innen gerichteten Rand 47 aufweist. Zwischen den einander zugewandten Flächen der Ränder 45 und 47 ist die Druckfeder 28 eingesetzt. Zur besseren Führung dient ein koaxial innerhalb des topfartigen Ventilelementes 46 angeformter Ansatz 48, der in das stirnseitige Loch 44 eingreift. Wiederum ist die Arbeit der durch das Ventilelement 46 und die Schulter 49 gebildeten Rückflußbremse unabhängig von der Stellung des Brauseumstellers.

Bei der Ausführungsform der Fig. 8 weist das Ventilelement 46 die gleiche Form wie bei der Ausführungsform nach Fig. 7 auf mit Ausnahme des fehlenden inneren Ansatzes 48. Statt dessen ist das Ventilelement 46 an der Innenwand des Anschlußstutzens gebildeten Längsrippen 49 von der Außenseite her geführt. Eine Begrenzung in axialer Richtung kann entweder durch eine nachträglich eingesetzte Lochscheibe 50 oder auch durch einen äußeren Rand 51 bewirkt werden, der mit den Enden der Rippen 49 zusammenwirkt.

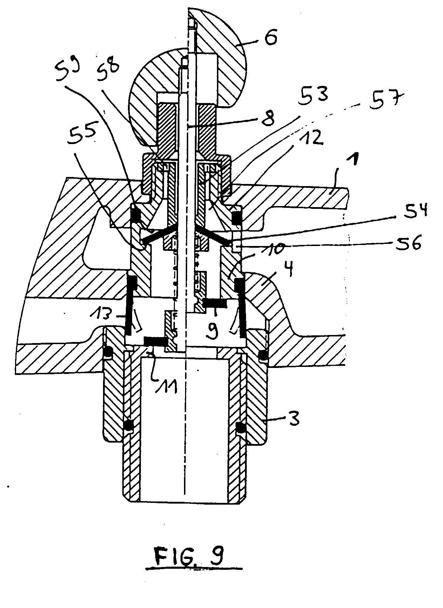

Der in Fig. 9 im Schnitt dargestellte Brauseumsteller ist in seinem unteren unterhalb der Zwischenwand 4 angeordneten Bereich identisch mit der Ausführungsform der Fig. 1, so daß dieser Teil der Beschreibung nicht mehr wiederholt wird. Das Gehäuse 12 des Brauseumstellers enthält in seinem oberen Bereich einen zentralen hohlen Kern 53, durch den sich die Betätigungsstange 8 erstreckt. An dem Kern 53 ist eine Scheibe 54 aus gummielastischem Material befestigt, die leicht vorgespannt ist und mit ihrem Außenrand auf einer umlaufenden Schulter 55 des Umstellergehäuses 12 aufliegt. Befindet sich der Brauseumsteller in der links in Fig. 9 dargestellten Stellung, so daß das Wasser zu dem rechten Wasserauslaß geleitet wird, so hebt der Wasserdruck die Scheibe 54 von der Schulter 55 ab, so daß das Wasser durch die Öffnung 56 hindurchströmen kann. Bei einem Druckabfall schließt nicht nur das Element 13 wie bei der Ausführungsform nach Fig. 6, sondern auch die Gummischeibe 54.

Außerhalb des Kerns 53 ist ein hohler Ringraum 57 gebildet, der über einzelne Bohrungen 58 und einen den Schaft 8 umgebenden Ringraum ins Freie führt. Dadurch erfolgt eine Belüftung des rechts in Fig. 9 dargestellten Auslaufs, bei dem es sich beispielsweise um einen unterhalb einer Wasseroberfläche liegenden Auslauf handeln kann. Im Öffnungsfall, d.h. bei nach oben verformter Scheibe 54, liegt diese mit ihrem Außenrand an einer der Schulter 55 gegenüberliegenden Schulter 59 an, so daß das Austreten von Wasser durch den Ringraum 57 und die Öffnungen 58 ebenfalls zuverlässig verhindert wird.

## Patentansprüche

1. Brauseumsteller für eine Sanitärarmatur, mit
1.1 einem Wassereinlaß (7),
1.2 zwei Wasserauslässen (2, 3), von denen einer zu einer Brause führt,
1.3 einem Ventilelement, das je nach Stellung einen der beiden Wasserauslässe (2, 3) verschließt und den jeweils anderen öffnet, sowie
1.4 einer Rückflußbremse, die das Zurücksaugen von Wasser aus dem Brauseumsteller (5) durch den Wassereinlaß (7) verhindert, dadurch gekennzeichnet, daß die Rückflußbremse derart angeordnet ist, daß sie das Zurücksaugen von Wasser aus dem zu der Brause führenden Wasserauslaß (3) verhindert, daß die Rückflußbremse als Baueinheit mit dem Brauseumsteller (5, 17) ausgebildet ist und daß der Brauseumsteller (5, 17) derart ausgebildet ist, daß er in ein Sanitärarmaturgehäuse (1) oder in einen Anschluß eines solchen Gehäuses (1) eingesetzt werden kann.

2. Brauseumsteller nach Anspruch 1, bei dem die Rückflußbremse derart angeordnet ist, daß sie das Zurücksaugen von Wasser aus beiden Auslässen (2, 3) verhindert.

3. Brauseumsteller nach Anspruch 1 oder 2, bei dem die Rückflußbremse derart ausgebildet ist, daß sie zusammen mit dem Ventilelement eine Belüftungseinrichtung bildet.

4. Brauseumsteller nach einem der vorhergehenden Ansprüche, mit einer Belüftungseinrichtung (16).

5. Brauseumsteller nach Anspruch 3 oder 4, bei dem zur Belüftung einer der beiden Auslässe (2) dient.

6. Brauseumsteller nach einem der vorhergehenden Ansprüche, bei dem die Rücklaufbremse stromab des Brauseumstellerventils angeordnet ist.

7. Brauseumsteller nach einem der vorhergehenden Ansprüche, bei dem die Rücklaufbremse stromauf des Brauseumstellerventils angeordnet ist.

8. Brauseumsteller nach einem der vorhergehenden Ansprüche, bei dem das Ventilelement (27, 33, 46) verschiebbar ausgebildet ist.

9. Brauseumsteller nach einem der vorhergehenden Ansprüche, bei dem die Rücklaufbremse ein verformbares Ventilelement (13, 27, 41, 46) aufweist.

10. Brauseumsteller nach einem der vorhergehenden Ansprüche, bei dem die Rücklaufbremse ein in dem Brauseanschluß (3, 20) gehaltertes Ventilelement (27, 33, 41, 46) aufweist.

11. Brauseumsteller nach einem der Ansprüche 1 bis 10, bei dem die Rücklaufbremse ein an dem Brauseumsteller (5, 17) gehaltertes Ventilelement (13, 27, 33, 46) aufweist.

12. Brauseumsteller nach einem der vorhergehenden Ansprüche, bei dem die Rücklaufbremse ein in Schließstellung beaufschlagtes Ventilelement (13, 27, 33, 41, 46) aufweist.

13. Brauseumsteller nach einem der vorhergehenden Ansprüche, bei dem das Ventilelement (7, 46) die Form einer zylindrischen Schürze aufweist.

14. Brauseumsteller nach einem der Ansprüche 1 bis 12, bei dem das Ventilelement (41) die Form einer Membran aufweist.

15. Brauseumsteller nach einem der Ansprüche 1 bis 12, bei dem das Ventilelement (27, 33) die Form eines Tellers bzw. einer Scheibe aufweist.

## Claims

1. Shower shifter for a sanitary fitting having
1.1 a water inlet (7),
1.2 two water outlets (2, 3), whereof one leads to a shower,
1.3 a valve element which, as a function of the position, closes one of the two water outlets (2, 3) and opens the other outlet, as well as
1.4 a reverse brake preventing a back suction of water from the shower shifter (5) through the water inlet (7), characterized in that the reverse brake is so positioned that it prevents the back suction of water from the water outlet (3) leading to the shower, that the reverse brake is constructed as a subassembly with the shower shifter (5, 17) and that the shower shifter (5, 17) is so constructed that it can be placed in a sanitary fitting casing (1) or in a connection of such a casing (1).

2. Shower shifter according to claim 1, wherein the reverse brake is so positioned that it prevents a back suction of water from both outlets (2, 3).

3. Shower shifter according to claim 1 or 2, wherein the reverse brake is so constructed that together with the valve element it forms a ventilating device.

4. Shower shifter according to one of the preceding claims with a ventilating device (16).

5. Shower shifter according to claim 3 or 4, wherein one of the two outlets (2) is used for ventilation.

6. Shower shifter according to one of the preceding claims, wherein the reverse brake is positioned downstream of the shower shifter valve.

7. Shower shifter according to one of the preceding claims, wherein the reverse brake is positioned upstream of the shower shifter valve.

8. Shower shifter according to one of the preceding claims, wherein the valve elemetn (27, 33, 46) is displaceably constructed.

9. Shower shifter according to one of the preceding claims, wherein the reverse brake has a deformable valve element (13, 27, 41, 46).

10. Shower shifter according to one of the preceding claims, wherein the reverse brake has a valve element (27, 33, 41, 46) retained in the shower connection (3, 20).

11. Shower shifter according to one of the claims 1 to 10, wherein the reverse brake has a valve element (13, 27, 33, 46) retained on the shower shifter (5, 17).

12. Shower shifter according to one of the preceding claims, wherein the reverse brake has a valve element (13, 27, 33, 41, 46) urged into the closed position.

13. Shower shifter according to one of the preceding claims, wherein the valve element (7, 46) is in the form of a cylindrical skirt.

14. Shower shifter according to one of the claims 1 to 12, wherein the valve element (41) is in the form of a diaphragm.

15. Shower shifter according to one of the claims 1 to 12, wherein the valve element (27, 33) is in the form of a disk.

## Revendications

1. Robinet déviateur de douche pour accessoire de robinetterie sanitaire, comprenant :
1.1 une admission d'eau (7),
1.2 deux sorties d'eau (2, 3), dont l'une dessert la douche,
1.3 un élément de soupape, qui ferme l'une des deux sorties d'eau (2, 3), en fonction de sa position, et dégage l'autre, et
1.4 un élément antiretour qui s'oppose à la réaspiration d'eau en provenance du robinet déviateur de douche (5) par l'admission d'eau (7), caractérisé en ce que l'élément antiretour est disposé de façon à empêcher la réaspiration d'eau en provenance de la sortie d'eau (3) desservant la douche, en ce que l'élément antiretour se présente sous la forme d'une unité modulaire avec le robinet déviateur de douche (5, 17), et en ce que la forme donnée au robinet déviateur de douche (5, 17) est telle qu'il peut être engagé dans un carter (1) d'accessoire de robinetterie sanitaire ou dans un raccord d'un tel carter.

2. Robinet déviateur de douche selon la revendication 1, dans lequel l'élément antiretour est disposé de façon à empêcher la réaspiration d'eau en provenance des deux sorties (2, 3).

3. Robinet déviateur de douche selon la revendication 1 ou 2, dans lequel l'élément antiretour est configuré pour former, combiné à l'élément de soupape, un dispositif de ventilation.

4. Robinet déviateur de douche selon l'une quelconque des revendications qui précèdent, comprenant un dispositif de ventilation (16).

5. Robinet déviateur de douche selon la revendication 3 ou 4, dans lequel l'une des deux sorties (2, 3) sert à la ventilation.

6. Robinet déviateur de douche selon l'une quelconque des revendications qui précèdent, dans lequel l'élément antiretour est disposé en aval de la soupape du robinet déviateur de douche.

7. Robinet déviateur de douche selon l'une quelconque des revendications qui précèdent, dans lequel l'élément antiretour est disposé en amont de la soupape du robinet déviateur de douche.

8. Robinet déviateur de douche selon l'une quelconque des revendications qui précèdent, dans lequel l'élément de soupape (27, 33, 46) est conçu pour pouvoir coulisser.

9. Robinet déviateur de douche selon l'une quelconque des revendications qui précèdent, dans lequel l'élément antiretour présente un élément de soupape déformable (13, 27, 41, 46).

10. Robinet déviateur de douche selon l'une quelconque des revendications qui précèdent, dans lequel l'élément antiretour présente un élément de soupape (27, 33, 41, 46) retenu dans le raccord de douche (3, 20).

11. Robinet déviateur de douche selon l'une quelconque des revendications qui précèdent, dans lequel l'élément antiretour présente un élément de soupape (13, 27, 33, 46) retenu sur le robinet déviateur de douche (5, 17).

12. Robinet déviateur de douche selon l'une quelconque des revendications qui précèdent, dans lequel l'élément antiretour présente un élément de soupape (13, 27, 33, 41, 46) sollicité en position de fermeture.

13. Robinet déviateur de douche selon l'une quelconque des revendications qui précèdent, dans lequel l'élément de soupape (7, 46) présente la forme d'un tablier cylindrique.

14. Robinet déviateur de douche selon l'une quelconque des revendications 1 à 12, dans lequel l'élément de soupape (41) présente la forme d'une membrane.

15. Robinet déviateur de douche selon l'une quelconque des revendications 1 à 12, dans lequel l'élément de soupape (27, 33) présente la forme d'une assiette ou d'un disque.
